# EUROPÄISCHE PATENTANMELDUNG

(11) **EP 0 802 084 A1**
(43) Veröffentlichungstag der Anmeldung: **22.10.1997**
(21) Anmeldenummer: 97104374.0
(22) Anmeldetag: 14.03.1997
(51) Int. Cl.: B60R 1/06, F16D 7/02

(54) **Getriebe-Einheit**

(30) Priorität: 16.04.1996 DE 19615002
(71) Anmelder: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE)
(74) Vertreter: Rau, Manfred, Dr. Dipl.-Ing.

(57) **Zusammenfassung**

Eine Getriebe-Einheit weist eine zwischen einem Abtriebsabschnitt (50) und einem Abtriebs-Teil (56) angeordnete, diese in Antriebsverbindung koppelnde Rutschkupplung (53) auf, die einen mit dem Abtriebsabschnitt (50) drehfest verbundenen Reibring (52) mit einer kegelstumpfförmigen ersten Reibfläche (59) aufweist. Das Abtriebs-Teil (56) ist mit einer an der ersten Reibfläche (59) anliegenden zweiten Reibfläche (58) versehen. Die Reibflächen (59, 58) werden durch eine vorgespannte Druckfeder (60) in Richtung der Drehachse (42) zusammengedrückt.

## Beschreibung

Die Erfindung betrifft eine Getriebe-Einheit nach dem Oberbegriff des Anspruches 1.

Bei einer bekannten Getriebe-Einheit der gattungsgemäßen Art sind in einem Gehäuse ein Elektromotor und ein mehrstufiges Untersetzungs-Getriebe vorgesehen. Die zwischen einem Abtriebsabschnitt des Untersetzungs-Getriebes und einem als Abtriebs-Schwenkteil ausgebildeten Abtriebs-Teil ist ein durch mehrere Scheiben nach Art einer Scheibenkupplung gebildete Rutschkupplung angeordnet. Die Scheiben werden durch eine Schraubendruckfeder zusammengedrückt, die sich einerseits auf den Scheiben und andererseits gegen einen Kopf einer Schraube abstützt, die in den Abtriebsabschnitt hineingeschraubt ist.

Derartige Motor-Getriebe-Einheiten werden zum Antrieb von Außenspiegeln von Kraftfahrzeugen und isnbesondere von Lastkraft-Fahrzeugen eingesetzt. Die Rutschkupplung ist jeweils erforderlich, damit das mit dem Abtriebs-Teil gekoppelte Teil, beispielsweise also ein Kraftfahrzeug-Spiegel auch von Hand verstellt werden kann. Die Untersetzungs-Getriebe sind nämlich selbsthemmend.

Abgesehen von einem gewissen Montageaufwand ist das Rutschmoment, bei dessen Überschreiten also die kraftschlüssige Verbindung der Rutschkupplung überwunden wird, nicht eindeutig definierbar, schwankt also in einem nicht vertretbaren Bereich. Es kommt hinzu, daß nicht auszuschließen ist, daß bei einer gegenüber der normalen Drehbewegung gegensinnigen Drehbewegung sich die Schraube lockert, wodurch die Rutschkupplung gelöst wird. Darüber hinaus ist ein nicht unbeträchtlicher Montageaufwand gegeben, da zahlreiche Bauteile vorhanden sind, die auch montiert werden müssen.

Der Erfindung liegt daher die Aufgabe zugrunde, eine Getriebe-Einheit der gattungsgemäßen Art zu schaffen, die aus wenigen Bauteilen besteht, einfach zu montieren ist und ein sehr genau vorgebbares Rutschmoment aufweist.

Diese Aufgabe wird erfindungsgemäß durch die Merkmale im Kennzeichnungsteil des Anspruches 1 gelöst.

Durch die erfindungsgemäßen Maßnahmen wird erreicht, daß an den kegelstumpfförmigen Reibflächen ein sehr genau definierbares Reibmoment gegeben ist, so daß wiederum auch ein sehr genau definiertes Rutschmoment gegeben ist, also innerhalb kleiner Toleranzbereiche das Moment im wesentlichen konstant ist, bei dem die Rutschkupplung durchrutscht.

Die Unteransprüche geben vorteilhafte Ausgestaltungen der Erfindung wieder.

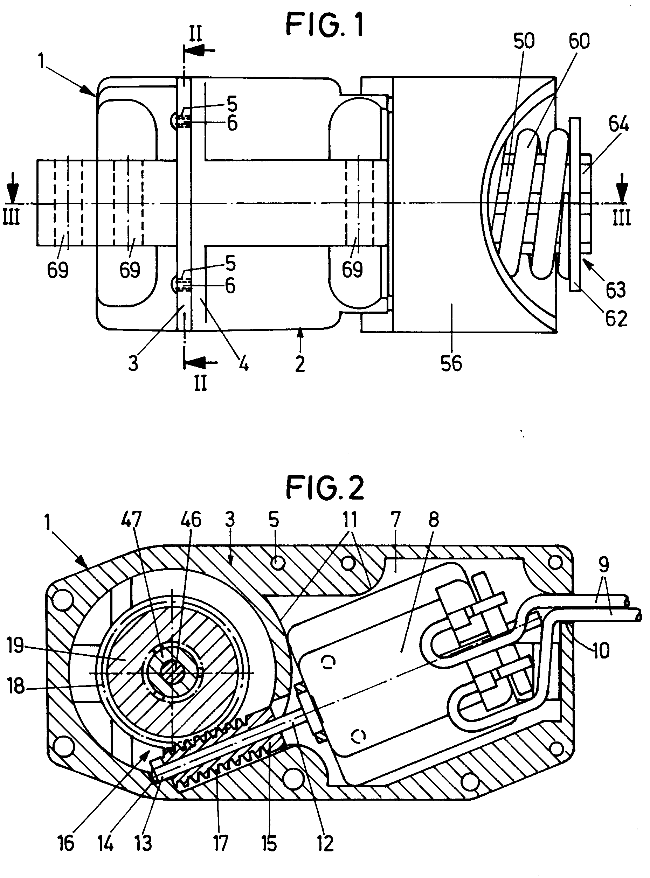

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Seitenansicht einer Motor-Getriebe-Einheit entsprechend den Sichtpfeilen I in der Fig. 2 und 3,
- Fig. 2: einen Querschnitt durch die Motor-Getriebe-Einheit gemäß der Schnittlinie II-II in Fig. 3,
- Fig. 3: einen Querschnitt durch die Motor-Getriebe-Einheit gemäß der Schnittlinie III-III In Fig. 1,
- Fig. 4: eine Längsansieht eines Abtriebs-Hohlrades,
- Fig. 5: eine Stirnansicht des Abtriebs-Hohlrades entsprechend dem Sichtpfeil V in Fig. 4, und
- Fig. 6: eine Draufsicht auf eine Widerlager-Ringscheibe.

Die in der Zeichnung dargestellte Motor-Getriebe-Einheit weist ein aus einem Gehäuseunterteil 1 und einem Gehäuseoberteil 2 bestehendes, aus einem schweißfähigen thermoplastischen Kunststoff gebildetes Gehäuse auf, wobei die beiden Gehäuseteile mit aneinanderlegbaren Flanschen 3, 4 versehen sind. Der dem Gehäuseunterteil 1 zugewandte Flansch 3 ist mit Zentrierlöchern 5 versehen, während am Flansch 4 des Gehäuseoberteils 2 diesen Zentrierlöchern 5 zugeordnete Zapfen 6 ausgebildet sind, die in die Zentrierlöcher 5 eingeführt und nach der Montage und dem Zusammenstekken des Gehäuseunterteils 1 und des Gehäuseoberteils 2 verschweißt werden, so daß sie gleichzeitig auch zur festen Verbindung von Gehäuseunterteil 1 und Gehäuseoberteil 2 dienen.

Das Gehäuse 1, 2 ist mit einem Aufnahmeraum 7 für einen Elektromotor 8 versehen, dessen elektrische Versorgungs-Leitungen 9 durch eine Öffnung 10 in den Aufnahmeraum 7 geführt werden. Der Motor 8 ist drehrichtungsumkehrbar, also in beiden möglichen Drehrichtungen antreibbar.Der Elektromotor 8 liegt im Aufnahmeraum 7 gegen im Gehäuse ausgebildete Anschläge 11 an, ist also mit dem Einlegen in das Gehäuseunterteil 1 bereits in seiner Lage ausgerichtet.

Der Elektromotor 8 ist mit einer aus dem Gehäuse 1, 2 frei vorragenden Welle 12 versehen, deren vom Elektromotor 8 entferntes freies Ende 13 in einer im Gehäuseunterteil 1 ausgeformten Lagerschale 14 abgestützt ist. Auf der aus Stahl bestehenden Welle 12 ist eine aus Kunststoff bestehende Zylinder-Schnecke 15 eines Schneckengetriebes 16 gegenüber der Welle 12 undrehbar, beispielsweise durch Preßsitz, angebracht.

Die schraubenförmige Verzahnung 17 der Schnecke 15 greift in eine entsprechend angepaßte Verzahnung 18 eines Schneckenrades 19 ein, das zusammen mit der Schnecke 15 das Schneckengetriebe 16 bildet.

Dem Schneckengetriebe 16 ist ein Planetengetriebe 20 nachgeordnet. Das Planetengetriebe 20 weist ein einstückig mit dem Schneckenrad 19 ausgebildetes, mit diesem also drehfest verbundenes Sonnenrad 21 auf, in dessen Außen-Verzahnung 22 drei Planetenräder 23, von denen nur eines dargestellt ist, mit ihrer entsprechenden Außen-Verzahnungen 24 eingreifen. Außerdem stützen die Planetenräder 23 sich an einem Hohlrad 25 ab, das mit einer Innen-Verzahnung 26 versehen ist, in die die jeweilige Außen-Verzahnung 24 der Planetenräder 23 eingreift. Das Hohlrad 25 ist gegenüber dem Gehäuse 1, 2 undrehbar, wozu es mit Vorsprüngen 27 an seinem Außenumfang versehen ist, die in angepaßte Ausnehmungen 28 im Gehäuse 1, 2 eingreifen. Die Planetenräder 23 sind auf Lagerzapfen 29 eines StegUnterteils 30 drehbar gelagert und werden dadurch in gleichen Winkelabständen zueinander gehalten.

Die Planetenräder 23 sind jeweils einstückig mit einem Zahnrad 32 eines Hohlrad-Getriebes 33 ausgebildet. Die Außenverzahnung dieser Zahnräder 32 des Hohlrad-Getriebes 33 greifen in eine Innen-Verzahnung 35 eines Abtriebs-Hohlrades 36 des Hohlrad-Getriebes 33 ein. In die Zahnräder 32 greift jeweils ein Lagerzapfen 37 eines Steg-Oberteils 38 ein. Das Steg-Unterteil 30 und das Steg-Oberteil 38 sind mittels am Steg-Unterteil 30 ausgebildeter Aufnahmeöffnungen 39 und in diese eingreifende, am Steg-Oberteil 38 ausgebildeter Verbindungszapfen 40 miteinander zu einem gehäuseartigen Steg miteinander verbunden.

Das Abtriebs-Hohlrad 36 weist einen einstückig mit diesem ausgebildeten zylindischen Lagerabschnitt 41 auf, der radial zur gemeinsamen Drehachse 42 des Schneckenrades 19, des Planetengetriebes 20 und des Hohlrad-Getriebes 33 in einer Lagerschale 43 gelagert ist, die am Gehäuseoberteil 3 ausgebildet ist. Das Abtriebs-Hohlrad 36 ist weiter in Richtung der Drehachse 42 relativ zum Gehäuseoberteil 2 durch sich radial zur Drehachse 42 erstreckende Anschlagflächen 44, 45 festgelegt, die die Drehung des Abtriebs-Hohlrades 36 nicht behindern, aber das Spiel, d.h. die Verschiebbarkeit des Hohlrades 36 in Richtung der Drehachse 42, auf etwa 0,1 mm beschränken.

Das Schneckengetriebe 16, das Planetengetriebe 20 und das Hohlradgetriebe 33 bilden ein Untersetzungsgetriebe.

Das Schneckenrad 19 ist auf einer durchgehenden zylindrischen Achse 46 aus Stahl gelagert, deren eines Ende in einer Aufnahme 47 im Gehäuseunterteil 1 mit Preßsitz, also gegenüber dem Gehäuseunterteil 1 undrehbar, gehalten ist. Das andere Ende der Achse 46 ist in einer zur Drehachse 42 korzentrischen, zylindrischen Ausnehmung 48 des Abtriebs-Hohlrades 36 radial zur Drehachse 42 weitgegehend spielfrei abgestützt, wobei aber die undrehbare Achse 46 die Drehung des Abtriebs-Hohlrades 46 nicht behindert. Das Schneckenrad 19 ist auf der Achse 46 frei drehbar gelagert und in Richtung der Drehachse 42 gegen die Stirnseite 49 der Aufnahme 47 in Richtung zum Gehäuseunterteil 1 abgestützt. In Richtung zum Abtriebs-Hohlrad 36 ist es axial am Hohlrad 25 des Planetengetriebes 20 abgestützt.

Das insgesamt aus Metall, beispielsweise Zink-Guß, bestehende Abtriebs-Hohlrad 36 weist einen sich an den Lagerabschnitt 41 anschließenden, im wesentlichen zylindrischen Abtriebsabschnitt 50 auf, der mindestens eine, bevorzugt aber zwei einander diametral zur Drehachse 42 gegenüberliegende parallel zur Drehachse 42 verlaufende Längsnuten 51 aufweist. Auf dem Abtriebs-Abschnitt 50 ist ein Reibring 52 einer Rutschkupplung 53 angeordnet, der mit je einem Vorsprung 54 in die Längsnuten 51 eingreift, wodurch eine drehfeste Verbindung zwischen dem Abtriebs-Hohlrad 36 und dem Reibring 52 hergestellt wird. Der Reibring 52 liegt gegen einen Ringbund 55 am Übergang vom Lagerabschnitt 41 zum Abtriebsabschnitt 51 in Richtung der Drehachse 42 fest an. Er bildet die oben bereits angesprochene Anschlagfläche 45.

Der Abtriebsabschnitt 50 ist von einem Abtriebs-Schwenkteil 56 umgeben, das eine parallel zur Drehachse 42 verlaufende Ausnehmung 57 aufweist, in die ein nicht dargestellter Bolzen eines zu verschwenkenden Teiles eingreifen kann. Das Abtriebs-Schwenkteil 56 weist eine Reibfläche 58 auf, die an einer Reibfläche 59 des Reibrings 52 anliegt. Beide Reibflächen 58, 59 sind kegelstumpfförmig ausgebildet und verjüngen sich vom Gehäuseoberteil 2 weg unter einem halben Kegelöffnungswinkel a. Es gilt 7° ≤ a ≤ 15° und bevorzugt a ≃ 10°.

Das Abtriebs-Schwenkteil 56 wird mittels einer vorgespannten Schrauben-Druckfeder 60 in Richtung zum Reibring 52 gedrückt, wobei vom Schwenkteil 56 und dem Reibring 52 nur die Reibflächen 58, 59 aneinanderliegen. Zwischen diesen beiden Teilen wird also die erwähnte Rutschkupplung 53 gebildet, deren Rutsch-Moment durch den Reibungskoeffizienten zwischen der Reibfläche 59 des Reibrings 52 und der Reibfläche 58 des Schwenkteils 56 und durch die normal - also senkrecht - zu den Reibflächen 58, 59 wirkende Kraft und den mittleren Durchmesser d der Reibfläche 58, 59 bestimmt wird. Die zwischen den Reibflächen 58, 59 senkrecht zu ihnen wirkende Kraft ist bei einer vorgegebenen Kraft der Druckfeder 60 in Richtung der Drehachse 42 umso größer, je Kleiner der halbe Kegelöffnungswinkel a der Reibflächen 58, 59 ist. Die senkrecht zu den Reibflächen 58, 59 zwischen diesen wirkenden Kraft ist auf auf jeden Fall um ein Mehrfaches größer, also die Kraft der Druckfeder 60. Es kommt hinzu, daß der Reibring 52 aus Metall, beispielsweise aus Zink-Guß, besteht, während das Abtriebs-Schwenkteil 56 aus einem gängigen Kunststoff besteht.

Die Schrauben-Druckfeder 60 liegt unter Zwischenschaltung einer als Druckscheibe 61 dienenden Ringscheibe gegen das Abtriebs-Schwenkteil 56 an. Diese Druckscheibe 61 ist ebenfalls in den Längsnuten 51 mittels Vorsprüngen 54 drehfest zum Abtriebs-Hohlrad 36 festgelegt. Das zwischen der Druckscheibe 61 und dem Schwenkteil 56 wirkende Reibmoment ist mindestens um den Quotienten 10 kleiner als das Rutschmoment der Rutschkupplung 53.

Die Druckfeder 60 liegt weiterhin im Bereich des freien Endes 64 des Abtriebsabschnitts 50 gegen eine weitere, als Widerlager 62 dienende Ringscheibe an, die mit dem Abtriebsabschnitt 50 mittels eines Bajonettverschlusses 63 verriegelt ist. Die beiden Ringscheiben bestehen aus Metall, beispielsweise Stahl. Sie sind identisch ausgebildet und weisen den Längsnuten 51 angepaßte Vorsprünge 54 auf, die im Querschnitt identisch den Vorsprüngen 54 am Reibring 52 sind.

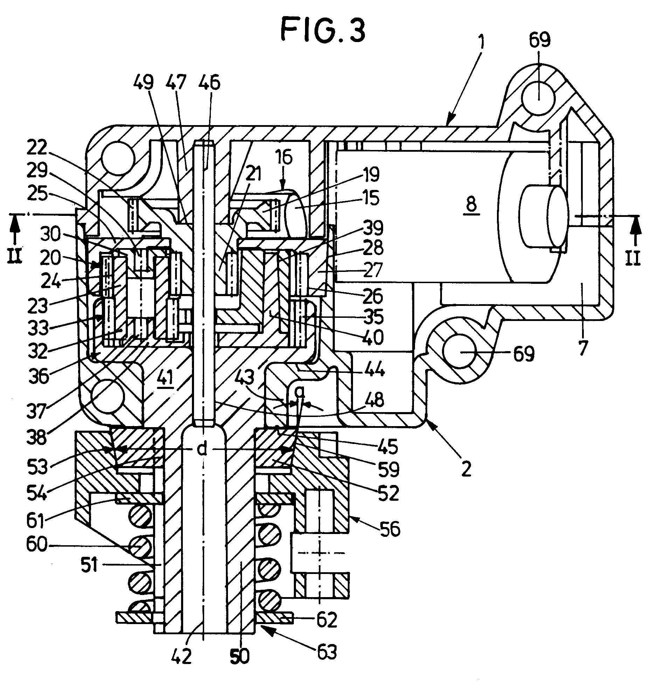

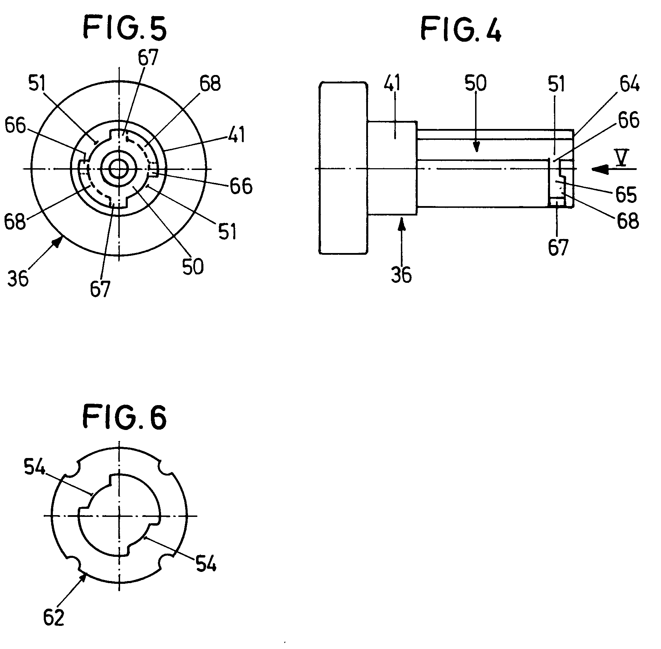

Wie aus den Fig. 4 bis 6 in Verbindung mit Fig. 3 hervorgeht, ist zur Erzeugung des Bajonettverschlusses 63 im Bereich des freien Endes 64 des Abtriebs-Hohlrades 36 an dessen Abtriebsabschnitt 50 jeweils eine Teil-Umfangsnut 65 ausgebildet, die einseitig aus einer Längsnut 51 herausführt. Jede Teil-Umfangsnut 65 ist also an einem Ende 66 zu einer Längsnut 51 offen. Dagegen ist sie am anderen Ende 67 zu der jeweils anderen Längsnut 51 verschlossen. Jede Teil-Umfangsnut 65 weist eine zum freien Ende 64 hin gerichtete Ausnehmung 68 auf, die den Vorsprüngen 54 an der Widerlager-Ringscheibe 62 entsprechen.

Alle Zahnräder, mit Ausnahme des Abtriebs-Hohlrades 36, bestehen aus Kunststoff und sind um die Drehachse 42 oder eine hierzu parallele Achse drehbar.

Die Montage geht in der Weise vor sich, daß der Elektromotor 8 in den Aufnahmeraum 7 im Gehäuseunterteil 1 eingelegt und die Leitungen 9 durch die Öffnung 10 herausgeführt werden. Das freie Ende 13 der bereits mit der Schnecke 15 versehenen Welle 12 wird hierbei in die Lägerschale 14 eingesetzt. Zuvor oder nachher wird die Achse 46 in die Aufnahme 47 eingedrückt. Dann wird das Schneckenrad 19 des Planetengetriebes 20 auf die Achse aufgeschoben, bis es zur Anlage an der Stirnseite 49 der Aufnahme 47 kommt. Im Anschluß daran wird das Hohlrad 25 des Planetengetriebes 20 auf die Achse geschoben. Dann wird die vormontierte Einheit aus Steg-Unterteil 30, Planetenrädern 23 mit Zahnrädern 32 und Steg-Oberteil 38 derart in das Hohlrad 25 eingeschoben, daß die Außen-Verzahnungen 24 der Planetenräder 23 in Eingriff mit der Innen-Verzahnung 26 des Hohlrades 25 kommen. Danach wird das Abtriebs-Hohlrad auf die Achse 46 aufgeschoben, wobei gleichzeitig die Außen-Verzahnungen 34 der Zahnräder 32 mit der Innen-Verzahnung 35 des Abtriebs-Hohlrades 36 in Eingriff kommen. Außerdem wird die Achse 46 hierbei in der Ausnehmung 48 des Abtriebs-Hohlrades 36 aufgenommen und radial zur Drehachse 42 abgestützt. Im Anschluß daran wird das Gehäuse-Oberteil 2 auf das Gehäuse-Unterteil 1 aufgesetzt, wobei der Abtriebsabschnitt 50 durch die Lagerschale 43 hindurchgeführt wird. Die Zapfen 6 des Gehäuse-Oberteils 2 greifen hierbei in die Zentrierlöcher 5 des Gehäuse-Unterteils 1 ein und werden mit diesem, beispielsweise durch Ultraschall, verschweißt. Das Abtriebs-Hohlrad 36 ist jetzt mit seinem Lagerabschnitt 41 in der Lagerschale 43 des Gehäuse-Oberteils 2 radial gelagert. Im Anschluß daran wird der Reibring 52 der Rutsch-Kupplung 53 auf den Abtriebs-Abschnitt 50 aufgeschoben und dann das Abtriebs-Schwenkteil 56 aufgesetzt, so daß die beiden Reibflächen 58, 59 aneinanderliegen. Dann wird die Druckscheibe 61 auf den Abtriebsabschnitt 50 aufgeschoben und die Schrauben-Druckfeder 60 ebenfalls auf den Abtriebs-Abschnitt 50 aufgesetzt. Mittels der Widerlager-Ringscheibe 62 wird anschließend die Schrauben-Druckfeder 60 in Richtung zum Reibring 52 vorgespannt und die Widerlager-Ringscheibe 62 mittels des Bajonettverschlusses 63 mit dem Abtriebsanschnitt 50 verriegelt. Hierzu wird die Widerlager-Ringscheibe 62 unter Zusammendrücken der Druckfeder 60 auf das freie Emde 64 des Abtriebsabschnitts 50 aufgeschoben und nach Erreichen der Teil-Umfangsnuten 65 derart verdreht, daß die Vorsprünge 54 in diese Teil-Umfangsnuten 65 gelangen und zwar bis zu deren Anschlag am verschlossenen Ende 67. Wenn jetzt die Widerlager-Ringscheibe 62 entlastet wird, wird sie soweit in Richtung zum freien Ende 64 zurückgeschoben, bis ihre Vorsprünge 54 in den Ausnehmungen 68 zur Anlage kommen. In diesen Ausnehmungen 68 ist dann die Widerlager-Ringscheibe 62 gegenüber dem Abtriebsabschnitt 50 unverdrehbar, kann also nicht lediglich durch Drehen gelöst werden, und zwar unabhängig davon, in welcher Richtung der Abtriebsabschnitt 50 mit dem Abtriebs-Schwenkteil 56 um die Drehachse 42 verdreht wird.

Die fertig montierte Motor-Getriebe-Einheit kann mittels am Gehäuse 1, 2 ausgebildeter Befestigungsöffnungen 69 für einen entsprechenden Einsatz montiert werden. Ein solcher Einsatz erfolgt beispielsweise in Außenspiegeln von Kraftfahrzegen und zwar insbesondere in Außenspiegeln für Lastkraftwagen vorgesehen.

## Patentansprüche

1. Getriebe-Einheit
- mit einem Gehäuse (1, 2) ,
- mit einem in dem Gehäuse (1, 2 ) angeordneten Untersetzungs-Getriebe,
- mit einem aus dem Gehäuse (1, 2) herausragenden, um eine Drehachse (42) drehantreibbaren Abtriebsabschnitt (50),
- mit einem mit dem Abtriebsabschnitt (50) in Antriebsverbindung gekoppelten Abtriebs-Teil (56) und
- mit einer zwischen dem Abtriebsabschnitt (50) und dem Abtriebs-Teil (56) angeordneten, diese in Antriebsverbindung koppelnden Rutschkupplung (53),
dadurch gekennzeichnet,
daß die Rutschkupplung (53) einen mit dem Abtriebsabschnitt (50) drehfest verbundenen Reibring (52) mit einer kegelstumpfförmigen ersten Reibfläche (59) aufweist,
daß das Abtriebs-Teil (56) mit einer an der ersten Reibfläche (59) anliegenden, kegelstumpfförmigen zweiten Reibfläche (58) versehen ist und
daß die Reibflächen (59, 58) durch eine vorgespannte Druckfeder (60) in Richtung der Drehachse (42) zusammengedrückt werden.

2. Getriebe-Einheit nach Anspruch 1, dadurch gekennzeichnet, daß die Druckfeder als Schrauben-Druckfeder (60) ausgebildet ist und einerseits am Abtriebsabschnitt (50) und andererseits am Abtriebs-Teil (56) abgestützt ist.

3. Getriebe-Einheit nach Anspruch 2, dadurch gekennzeichnet, daß die Schrauben-Druckfeder (60) mittels eines Bajonettverschlusses (63) mit dem Abtriebsabschnitt (50) verbunden ist.

4. Getriebe-Einheit nach einem der Ansprüche 1 bis 3, dadurch gekennzeichnet, daß für den halben Kegelwinkel (a) der Reibflächen (59, 58) gilt 7° ≤ a ≤ 15° und insbesondere a ≃ 10°.

5. Getriebe-Einheit nach einem der Ansprüche 1 bis 4, dadurch gekennzeichnet, daß der Reibring (52) aus Metall und das Abtriebs-Teil (56) aus Kunststoff bestehen.

6. Getriebe-Einheit nach einem der Ansprüche 1 bis 5, dadurch gekennzeichnet, daß der Reibring (52) formschlüssig mit dem Abtriebsabschnitt (50) verbunden ist.
